# EUROPEAN PATENT APPLICATION

(11) **EP 4 755 619 A1**
(43) Date of publication of application: **10.06.2026**
(21) Application number: 25857922.6
(22) Date of filing: 02.04.2025
(51) Int. Cl.: B29D 30/06, B29C 35/16

(54) **POST CURE INFLATOR AND TIRE PRODUCTION APPARATUS**

(30) Priority: 18.09.2024 CN 202422276215 U
(71) Applicant: ARP Technologies (Suzhou) Co., Ltd., Suzhou, Jiangsu 215216 (CN)
(72) Inventor: LIU, Baolong, Suzhou, Jiangsu 215216 (CN)
(74) Representative: Biallo, Dario
(86) International application number: PCT/CN2025/086898
(87) International publication number: WO 2026/060923

(57) **Abstract**

Provided are a post-inflation apparatus and a tire manufacturing device. The post-inflation apparatus includes a frame (1), an upper crossbeam mechanism (2), a lower crossbeam mechanism (3), a lifting leadscrew (4), a leadscrew nut, a worm wheel, a worm (5), and a drive member (6). The lower crossbeam mechanism (3) is disposed on the frame (1), and the upper crossbeam mechanism (2) and the lower crossbeam mechanism (3) cooperate to inflate a tire. The lifting leadscrew (4) is slidably disposed on the frame (1) along a vertical direction, and the upper crossbeam mechanism (2) is disposed at a lower end of the lifting leadscrew (4). The leadscrew nut is rotatably disposed on the frame (1) and threadedly engages with the lifting leadscrew (4). The worm wheel is coaxially sleeved onto the leadscrew nut. The worm (5) is rotatably disposed on the frame (1) and meshes with the worm wheel. The drive member (6) is disposed on the frame (1) and configured to drive the worm (5) to rotate.

## Description

This application claims priority to Chinese Patent Application No. 202422276215.8 filed with the China National Intellectual Property Administration (CNIPA) on Sep. 18, 2024, the disclosure of which is incorporated herein by reference in its entirety.

### TECHNICAL FIELD

The present application relates to the technical field of tire manufacturing, for example, to a post-inflation apparatus and a tire manufacturing device.

### BACKGROUND

As a device used during the vulcanization process in tire manufacturing, a post-inflation apparatus is one of key devices that determine the quality of a tire. In the related art, hydraulic transmission is typically adopted for the post-inflation apparatus. The hydraulic transmission features fast response, high efficiency, and stepless speed regulation. However, the hydraulic transmission is prone to issues such as oil leakage and burst pipes, which may adversely affect the stability and safety of the post-inflation apparatus, thereby generating potential safety risks in the tire manufacturing process.

### SUMMARY

The present application provides a post-inflation apparatus and a tire manufacturing device so that the post-inflation apparatus can have better stability and safety, thereby avoiding potential safety risks in the tire manufacturing process.

The present application provides a post-inflation apparatus.

The post-inflation apparatus includes a frame, an upper crossbeam mechanism, a lower crossbeam mechanism, a lifting leadscrew, a leadscrew nut, a worm wheel, a worm, and a drive member.

The lower crossbeam mechanism is disposed on the frame, and the upper crossbeam mechanism and the lower crossbeam mechanism are configured to cooperate with each other to inflate a tire.

The lifting leadscrew is slidably disposed on the frame along a vertical direction, and the upper crossbeam mechanism is disposed at a lower end of the lifting leadscrew.

The leadscrew nut is rotatably disposed on the frame and threadedly engages with the lifting leadscrew.

The worm wheel is coaxially sleeved onto the leadscrew nut.

The worm is rotatably disposed on the frame and meshes with the worm wheel.

The drive member is disposed on the frame and configured to drive the worm to rotate.

The present application further provides a tire manufacturing device. The tire manufacturing device includes the above-described post-inflation apparatus and a transfer mechanism, and the transfer mechanism is configured to supply the tire to the post-inflation apparatus.

### BRIEF DESCRIPTION OF DRAWINGS

FIG. 1 is a structural view of a post-inflation apparatus according to the present application.
FIG. 2 is a structural view of a connecting rod according to the present application.
FIG. 3 is an enlarged view of part A in FIG. 1.
FIG. 4 is a structural view of a tire manufacturing device according to the present application.

### Reference list

- 1: frame
- 11: upper crossbeam
- 12: lower crossbeam
- 13: connecting rod
- 131: rod body
- 132: first connecting portion
- 133: first nut
- 134: second connecting portion
- 135: second nut
- 136: first washer
- 137: second washer
- 138: third washer
- 139: fourth washer
- 2: upper crossbeam mechanism
- 3: lower crossbeam mechanism
- 4: lifting leadscrew
- 5: worm
- 6: drive member
- 7: guiding assembly
- 71: sliding sleeve
- 72: sliding rod
- 73: connector
- 74: reinforcing member
- 100: tire manufacturing device
- 10: post-inflation apparatus
- 20: transfer mechanism

### DETAILED DESCRIPTION

In the present application, the term "comprising", "including", "having", or any other variation thereof is intended to encompass a non-exclusive inclusion so that a process, method, article, or apparatus that includes a series of elements not only includes those elements but also includes other elements that are not expressly listed or further includes elements that are inherent to such a process, method, article, or apparatus. Without further limitations, an element defined by the phrase "comprising a..." does not preclude the presence of additional identical elements in the process, method, article, or apparatus that includes this element.

In the present application, the term "and/or" is an association relationship describing associated objects and indicates that three relationships may exist. For example, when an apparatus is described as including A and/or B, it may represent the following three situations: the apparatus includes A; the apparatus includes both A and B; or the apparatus includes B. In addition, in the present application, the character "/" generally indicates an "and/or" relationship between associated objects before and after the character "/".

In the present application, the terms "connected", "combined", "coupled", or "mounted" may be directly connected, combined, coupled, or mounted and may also be indirectly connected, combined, coupled, or mounted. For example, the direct connection indicates that two parts or assemblies are connected together without an intermediate member, and the indirect connection indicates that two parts or assemblies are connected to at least one intermediate member, respectively, and the two parts or assemblies are connected through the intermediate members. In addition, "connection" and "coupling" may be physical or mechanical connections or couplings and may include electrical connections or couplings.

In the present application, those of ordinary skill in the art will understand that a relative term used in conjunction with quantities or conditions (for example, "about", "approximately", "basically", or the like) is inclusive of the stated value and has the meaning indicated by the context. For example, the relative term includes at least the degree of error associated with the measurement of a particular value, the tolerance resulting from manufacturing, assembly, and usage and associated with a particular value, and the like. Such a term is to be construed as disclosing a range defined by the absolute values of two endpoints. The relative term may refer to that an indicated value is added or reduced by a certain percentage (such as 1%, 5%, 10%, or more). A value not modified by the relative term should also be disclosed as a particular value with a tolerance. In addition, when expressing a relative angular position relationship (for example, substantially parallel or substantially perpendicular), "substantially" may refer to that a certain degree (such as 1 degree, 5 degrees, 10 degrees, or more) is added to or subtracted from the indicated angle.

In the present application, those of ordinary skill in the art will understand that the function implemented by an assembly may be implemented by one assembly or multiple assemblies. Similarly, the function implemented by a part may be implemented by one part or a combination of multiple parts.

In the present application, the terms "up", "down", "left", "right", "front", "rear", and other orientation words are described by the orientations and position relations shown in the drawings. In addition, in the context, when an element is connected "above" or "below" another element, the element can not only be directly connected "above" or "below" the other element but can also be indirectly connected "above" or "below" the other element through an intermediate element. Orientation words such as an upper side, a lower side, a left side, a right side, a front side, and a rear side not only represent perfect orientations but also may be understood as lateral orientations. For example, the term "below" may refer to "directly below", "on a lower left", "on a lower right", "on a front lower side", "on a rear lower side", and the like.

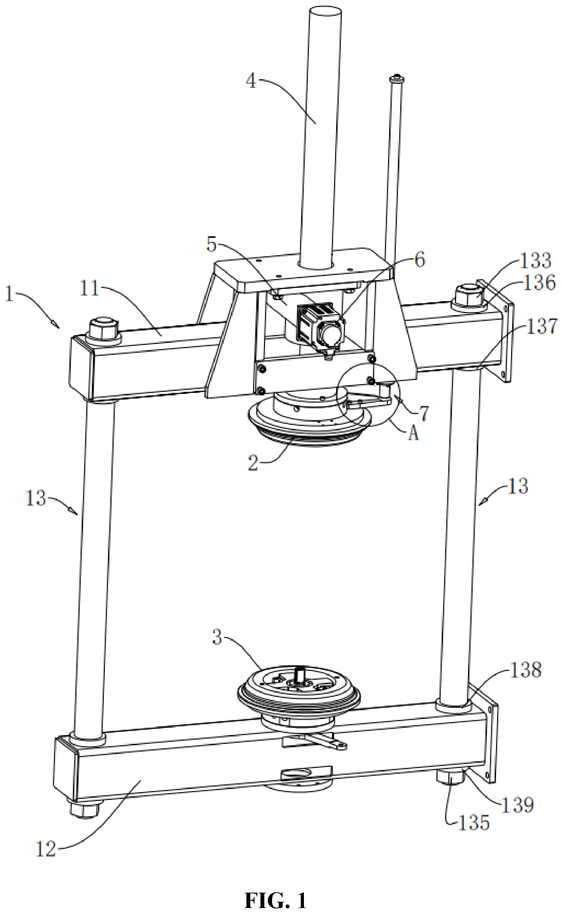

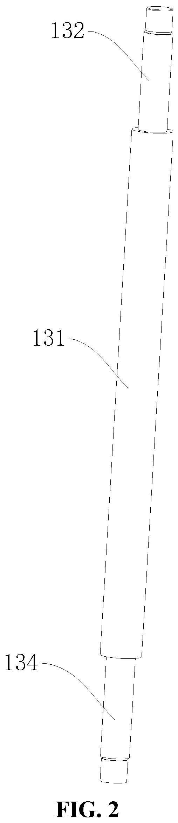

Referring to FIGS. 1 to 3, this embodiment provides a post-inflation apparatus. The post-inflation apparatus includes a frame 1, an upper crossbeam mechanism 2, a lower crossbeam mechanism 3, a lifting leadscrew 4, a leadscrew nut, a worm wheel, a worm 5, and a drive member 6. The lower crossbeam mechanism 3 is disposed on the frame 1, and the upper crossbeam mechanism 2 and the lower crossbeam mechanism 3 can cooperate with each other to inflate a tire. The lifting leadscrew 4 is slidably disposed on the frame 1 along a vertical direction, and the upper crossbeam mechanism 2 is disposed at a lower end of the lifting leadscrew 4. The leadscrew nut is rotatably disposed on the frame 1 and threadedly engages with the lifting leadscrew 4. The worm wheel is coaxially sleeved onto the leadscrew nut. The worm 5 is rotatably disposed on the frame 1 and meshes with the worm wheel. The drive member 6 is disposed on the frame 1 and configured to drive the worm 5 to rotate.

In practical applications, the tire is first placed on the lower crossbeam mechanism 3. Then, the drive member 6 drives the worm 5 to rotate, thereby driving the worm wheel to rotate. The worm wheel drives the leadscrew nut to rotate, the leadscrew nut subsequently drives the leadscrew to move down, and the leadscrew drives the upper crossbeam mechanism 2 to move down so that the upper crossbeam mechanism 2 is located in an operation position in which the upper crossbeam mechanism 2 can cooperate with the lower crossbeam mechanism 3 to inflate the tire. Subsequently, the upper crossbeam mechanism 2 and the lower crossbeam mechanism 3 cooperate with each other to inflate the tire. After vulcanization is completed, the drive member 6 drives the worm 5 to rotate backward to drive the upper crossbeam mechanism 2 to reset.

Through the transmission structure formed by the worm wheel, the worm 5, the leadscrew nut, and the lifting leadscrew 4, the post-inflation apparatus avoids issues associated with hydraulic transmission in the related art, such as oil leakage and burst pipes, which may compromise stability and safety. As a result, the post-inflation apparatus can have better stability and safety, thereby avoiding potential safety risks in the tire manufacturing process. The upper crossbeam mechanism 2 and the lower crossbeam mechanism 3 may employ structures well known to those skilled in the art, and therefore are not repeated. The transmission structure formed by the worm wheel and the worm 5 also has a self-locking structure. In other words, the worm wheel cannot drive the worm 5 to rotate. Thus, after the drive member 6 stops driving, the leadscrew can remain in the current position, thereby eliminating the need for an additional structure to limit the position of the leadscrew. Therefore, the structure can be simple, and the operation cost can be low.

Optionally, the drive member 6 is a servomotor, and an output shaft of the servomotor is coaxially connected to the worm 5. Employing the servomotor to drive the worm 5 to rotate can provide high efficiency, energy savings, and stable operation. The model of the servomotor may be selected according to the actual application scenario. In other embodiments, the drive member 6 may also be any mechanism having a rotation drive function in the related art, which is not repeated in detail.

To improve the smoothness of the sliding movement of the upper crossbeam mechanism 2, the post-inflation apparatus further includes a guiding assembly 7. The guiding assembly 7 is disposed on the frame 1 and configured to guide the upper crossbeam mechanism 2 to ascend and descend. Optionally, the guiding assembly 7 includes a sliding sleeve 71, a sliding rod 72, and a connector 73. The sliding sleeve 71 is disposed on the frame 1. The sliding rod 72 slidably engages with the sliding sleeve 71, and a lower end of the sliding rod 72 is connected to the upper crossbeam mechanism 2. The lower end of the sliding rod 72 is connected to the upper crossbeam mechanism 2 through the connector 73. In some optional embodiments, the guiding assembly 7 further includes a reinforcing member 74, and the reinforcing member 74 is disposed on the connector 73. With this arrangement, the structural strength of the connector 73 can be improved.

Optionally, the frame 1 includes an upper crossbeam 11, a lower crossbeam 12, and connecting rods 13. The lifting leadscrew 4, the leadscrew nut, the worm wheel, the worm 5, and the drive member 6 are all disposed on the upper crossbeam 11. The lower crossbeam 12 is located directly below the upper crossbeam 11, and the lower crossbeam mechanism 3 is disposed on the lower crossbeam 12. The upper crossbeam 11 and the lower crossbeam 12 are integrally connected through the connecting rods 13. With this arrangement, the frame 1 can have a more compact structure and lower cost. In this embodiment, the upper crossbeam 11 and the lower crossbeam 12 may be hollow square tubes commonly used in the related art, which can help reduce the weight of the frame 1 and facilitate assembly and handling of the frame 1.

In some optional embodiments, two connecting rods 13 are provided, and an end portion of the upper crossbeam 11 and an end portion of the lower crossbeam 12 that are on the same side are integrally connected through the same connecting rod 13. With this arrangement, the frame 1 forms a rectangular frame structure with higher structural strength.

In this embodiment, the two connecting rods 13 have the same structure. The structure of one connecting rod 13 of the connecting rods 13 is used as an example below for illustration. The connecting rod 13 includes a rod body 131, a first connecting portion 132, a first nut 133, a second connecting portion 134, and a second nut 135. The first connecting portion 132 is disposed at an upper end of the rod body 131. The first connecting portion 132 can penetrate through an end portion of the upper crossbeam 11 and be screwed with the first nut 133 so that the first connecting portion 132 can abut against two sides of the upper crossbeam 11 through the first nut 133 and an upper end surface of the rod body 131, respectively. The second connecting portion 134 is disposed at a lower end of the rod body 131. The second connecting portion 134 can penetrate through an end portion of the lower crossbeam 12 and be screwed with the second nut 135 so that the second connecting portion 134 can abut against two sides of the lower crossbeam 12 through the second nut 135 and a lower end surface of the rod body 131, respectively.

In some optional embodiments, the connecting rod 13 further includes a first washer 136, a second washer 137, a third washer 138, and a fourth washer 139. The first washer 136 is disposed between the first nut 133 and the upper crossbeam 11. The second washer 137 is disposed between the upper end surface of the rod body 131 and the upper crossbeam 11. The third washer 138 is disposed between the lower end surface of the rod body 131 and the lower crossbeam 12. The fourth washer 139 is disposed between the second nut 135 and the lower crossbeam 12. The arrangement of the first washer 136 can increase the contact area between the first nut 133 and the upper crossbeam 11, thereby enhancing the connection strength between the first nut 133 and the upper crossbeam 11. The arrangement of the second washer 137 can increase the contact area between the upper end surface of the rod body 131 and the upper crossbeam 11, thereby enhancing the connection strength between the upper end surface of the rod body 131 and the upper crossbeam 11. The arrangement of the third washer 138 can increase the contact area between the lower end surface of the rod body 131 and the lower crossbeam 12, thereby enhancing the connection strength between the lower end surface of the rod body 131 and the lower crossbeam 12. The arrangement of the fourth washer 139 can increase the contact area between the second nut 135 and the lower crossbeam 12, thereby enhancing the connection strength between the second nut 135 and the lower crossbeam 12. The models of the first washer 136, the second washer 137, the third washer 138, and the fourth washer 139 may all be selected according to the actual application scenario.

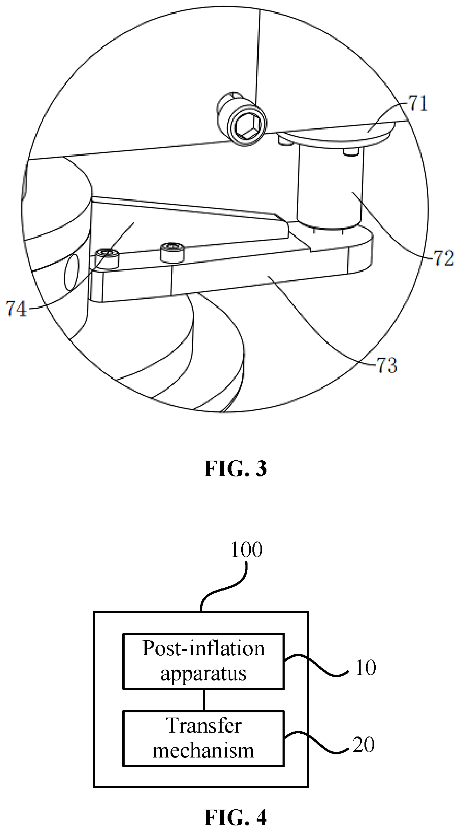

This embodiment further provides a tire manufacturing device 100. The tire manufacturing device 100 includes the above-described post-inflation apparatus 10. In some optional embodiments, as shown in FIG. 4, the tire manufacturing device 100 includes the above-described post-inflation apparatus 10 and a transfer mechanism 20. The transfer mechanism 20 is configured to supply the tire to the post-inflation apparatus 10. The tire manufacturing device 100 including the post-inflation apparatus 10 can have better stability and safety, thereby avoiding the potential safety risks in the tire manufacturing process.

## Claims

1. A post-inflation apparatus, comprising:
a frame (1);
an upper crossbeam mechanism (2) and a lower crossbeam mechanism (3), wherein the lower crossbeam mechanism (3) is disposed on the frame (1), and the upper crossbeam mechanism (2) and the lower crossbeam mechanism (3) are configured to cooperate with each other to inflate a tire;
a lifting leadscrew (4), wherein the lifting leadscrew (4) is slidably disposed on the frame (1) along a vertical direction, and the upper crossbeam mechanism (2) is disposed at a lower end of the lifting leadscrew (4);
a leadscrew nut, wherein the leadscrew nut is rotatably disposed on the frame (1) and threadedly engages with the lifting leadscrew (4);
a worm wheel coaxially sleeved onto the leadscrew nut;
a worm (5), wherein the worm (5) is rotatably disposed on the frame (1) and meshes with the worm wheel; and
a drive member (6), wherein the drive member (6) is disposed on the frame (1) and configured to drive the worm (5) to rotate.

2. The post-inflation apparatus according to claim 1, wherein the drive member (6) is a servomotor, and an output shaft of the servomotor is coaxially connected to the worm (5).

3. The post-inflation apparatus according to claim 1, further comprising:
a guiding assembly (7), wherein the guiding assembly (7) is disposed on the frame (1) and configured to guide the upper crossbeam mechanism (2) to ascend and descend.

4. The post-inflation apparatus according to claim 3, wherein the guiding assembly (7) comprises:
a sliding sleeve (71) disposed on the frame (1);
a sliding rod (72) slidably engaging with the sliding sleeve (71); and
a connector (73), wherein a lower end of the sliding rod (72) is connected to the upper crossbeam mechanism (2) through the connector (73).

5. The post-inflation apparatus according to claim 4, wherein the guiding assembly (7) further comprises:
a reinforcing member (74) disposed on the connector (73).

6. The post-inflation apparatus according to claim 1, wherein the frame (1) comprises:
an upper crossbeam (11), on which the lifting leadscrew (4), the leadscrew nut, the worm wheel, the worm (5), and the drive member (6) are disposed;
a lower crossbeam (12), wherein the lower crossbeam (12) is located directly below the upper crossbeam (11), and the lower crossbeam mechanism (3) is disposed on the lower crossbeam (12); and
a connecting rod (13), wherein the upper crossbeam (11) and the lower crossbeam (12) are integrally connected through the connecting rod (13).

7. The post-inflation apparatus according to claim 6, wherein two connecting rods (13) are provided, and an end portion of the upper crossbeam (11) and an end portion of the lower crossbeam (12) that are on a same side are integrally connected through a same connecting rod (13) of the two connecting rods (13).

8. The post-inflation apparatus according to claim 7, wherein the connecting rod (13) comprises:
a rod body (131);
a first connecting portion (132) disposed at an upper end of the rod body (131);
a first nut (133), wherein the first connecting portion (132) is configured to penetrate through the end portion of the upper crossbeam (11) and be screwed with the first nut (133) to abut against two sides of the upper crossbeam (11) through the first nut (133) and an upper end surface of the rod body (131), respectively;
a second connecting portion (134) disposed at a lower end of the rod body (131); and
a second nut (135), wherein the second connecting portion (134) is configured to penetrate through the end portion of the lower crossbeam (12) and be screwed with the second nut (135) to abut against two sides of the lower crossbeam (12) through the second nut (135) and a lower end surface of the rod body (131), respectively.

9. A tire manufacturing device, comprising the post-inflation apparatus (10) according to any one of claims 1 to 8 and a transfer mechanism (20), wherein the transfer mechanism (20) is configured to supply the tire to the post-inflation apparatus (10).
